# EUROPÄISCHE PATENTSCHRIFT

(11) **EP 4 325 071 B1**
(45) Veröffentlichungstag und Bekanntmachung des Hinweises auf die Patenterteilung: **19.11.2025**
(21) Anmeldenummer: 23188276.2
(22) Anmeldetag: 28.07.2023
(51) Int. Cl.: F16B 12/24, F16B 12/46

(54) **ECKVERBINDER**
CORNER CONNECTOR
RACCORD D'ANGLE

(30) Priorität: 15.08.2022 DE 202022104613 U
(43) Veröffentlichungstag der Anmeldung: 21.02.2024
(73) Patentinhaber: Plocher Möbelelemente GmbH, 72189 Vöhringen (DE)
(72) Erfinder: EICH, Hartmut, 78733 Aichha^lden (DE); SHALA, Dardan, 78727 Oberndorf a. N. (DE)
(74) Vertreter: Witte, Weller & Partner Patentanwälte mbB

(56) Entgegenhaltungen:
- DE-A1- 2 715 830
- DE-U1- 8 610 592
- GB-A- 1 341 399
- US-A- 2 133 204
- US-A- 3 218 097
- US-A- 5 213 403
- US-B1- 6 390 359

## Beschreibung

Die Erfindung betrifft einen Eckverbinder zum Verbinden von zwei plattenförmigen Elementen in einem - vorzugsweise rechten - Winkel mit den Merkmalen des Oberbegriffs des Anspruchs 1. Insbesondere ist der erfindungsgemäße Eckverbinder zum Verbinden von zwei plattenförmigen Elementen eines Möbels beziehungsweise zum Verbinden von zwei Möbelplatten vorgesehen. Die plattenförmigen Elemente beziehungsweise Möbelplatten sind insbesondere Wände einer Schublade. Des Weiteren betrifft die Erfindung eine Eckverbindung beziehungsweise ein Möbel mit zwei plattenförmigen Elementen beziehungsweise mit zwei Möbelplatten, die mit dem Eckverbinder in einem vorzugsweise rechten Winkel miteinander verbunden sind, mit den Merkmalen des Oberbegriffs des Anspruchs 13, bzw. des Anspruchs 14.

Das Gebrauchsmuster DE 20 2015 006 757 U1 offenbart einen Möbeleckverbinder zum Verbinden von zwei Möbelplatten in einem rechten Winkel, der ein inneres L-Profil und ein äußeres L-Profil aufweist, die in einem Abstand voneinander und parallel zueinander miteinander verrastbar sind derart, dass die Schenkel des Möbeleckverbinders doppelwandig sind beziehungsweise Taschen bilden, in die Enden der beiden zu verbindenden Möbelplatten gesteckt werden können. Außenseiten der Schenkel des inneren L-Profils weisen parallel zu einem Scheitel des L-Profils verlaufende Stege auf, die in Nuten in Innenseiten der beiden Möbelplatten greifen derart, dass die Möbelplatten gegen Herausziehen aus den doppelwandigen Schenkeln des Möbeleckverbinders gehalten sind.

Das Patent US 2 133 204 A offenbart einen Eckverbinder mit einem rechtwinkligen L-Profil aus Stahl, von dessen einem Schenkel innen mehrere glattwandige, zylindrische Zapfen in gleichen Abständen voneinander in einer gemeinsamen Ebene parallel zum anderen Schenkel abstehen. Der bekannte Eckverbinder wird von unten an einem Boden und einer Wand, die rechtwinklig auf dem Boden aufsteht, eines Schranks angeordnet derart, dass das L-Profil außen an dem Boden und der Wand anliegt und dass die Zapfen in Löcher gelangen, die parallel zu der Wand durch den Boden in die Wand gebohrt sind. Zur Sicherung werden Schrauben quer zu den Zapfen des Eckverbinders durch die Wand des Schranks in Innengewindelöcher in den Zapfen geschraubt, die die Zapfen des Eckverbinders quer durchsetzen. Zum Lösen des Eckverbinders zum Zerlegen und Abbauen des Schranks werden die Schrauben herausgedreht, wonach der Eckverbinder von dem Schrank abgenommen werden kann.

Zur Verbindung der Wände einer Schublade schlägt das Patent GB 1 341 399 A vor, Kanthölzer mit quadratischem Querschnitt stehend an Ecken der Schublade zwischen deren Wänden anzuordnen. Von den Wänden der Schublade zugewandten Seiten der Kanthölzer stehen Widerhaken aufweisende Zapfen ab, die in Löcher greifen derart, dass sie über die Kanthölzer die Wände der Schublade verbinden.

Das Patent US 5 213 403 A offenbart einen Eckverbinder für Wände einer Schublade, der eine Schiebeführung für eine Führungsschiene zum Ausziehen der Schublade an einer Unterseite eines Bodens der Schublade aufweist. Der Eckverbinder weist ein L-Profil auf, dessen einer Schenkel zwischen zwei aneinander stoßende Wände der Schublade greift und von dem beidseitig gleichachsige Zapfen abstehen, die in Löcher in den aneinander stoßenden Wänden der Schublade greifen. Ein anderer Schenkel des L-Profils liegt außen an einer der beiden Wände der Schublade an.

Aufgabe der Erfindung ist, einen Eckverbinder vorzuschlagen, mit dem sich zwei vorzugsweise in einem rechten Winkel zueinander angeordnete plattenförmige Elemente einfach verbinden lassen.

Diese Aufgabe wird durch die Merkmale des Anspruchs 1 gelöst. Die abhängigen Ansprüche haben vorteilhafte Ausgestaltungen und Weiterbildungen der Erfindung zum Gegenstand.

Der erfindungsgemäße Eckverbinder ist zum Verbinden von zwei plattenförmigen, insbesondere ebenen Elementen vorgesehen, die in einem Winkel zueinander angeordnet sind beziehungsweise die von dem Eckverbinder in dem Winkel zueinander verbunden werden. Die plattenförmigen Elemente sind insbesondere Elemente eines Möbels und können auch als Möbelplatten aufgefasst werden. Der Eckverbinder weist für jedes der beiden plattenförmigen Elemente eine insbesondere ebene Anlagefläche auf, wobei die beiden Anlageflächen in einem Winkel von weniger als 180° und vorzugsweise in einem Winkel von 90° zueinander angeordnet sind. Die beiden Anlageflächen des erfindungsgemäßen Eckverbinders schließen also eine Innenecke mit einem Winkel von vorzugsweise 90° zwischen sich ein. Die beiden Anlageflächen sind in dem Winkel zueinander angeordnet, in dem die beiden plattenförmigen Elemente zueinander angeordnet und miteinander verbunden werden sollen. Von einer ersten der beiden Anlageflächen steht ein Zapfen vorzugsweise senkrecht zu der Anlagefläche ab. Die Innenseite des Schenkels des L-Profils, von dem der Zapfen absteht, wird hier als erste Anlagefläche des Eckverbinders bezeichnet. Entsprechend wird der Schenkel des L-Profils, von dessen Innenseite der Zapfen absteht, als erster Schenkel des L-Profils und des Eckverbinders bezeichnet. Zum Verbinden der beiden plattenförmigen Elemente wird der Eckverbinder mit dem Zapfen durch ein Durchgangsloch in einem ersten der beiden plattenförmigen Elemente in ein Sackloch in einem zweiten der beiden plattenförmigen Elemente gesteckt, das mit dem Durchgangsloch fluchtet. Die erste Anlagefläche des erfindungsgemäßen Eckverbinders liegt an einer Außenseite des ersten plattenförmigen Elements und die zweite Anlagefläche an einer Außenseite des zweiten plattenförmigen Elements an. Der Zapfen weist Widerhaken an einer Umfangsfläche auf, die einem Herausziehen des Zapfens aus dem Sackloch in dem zweiten plattenförmigen Element entgegenwirken oder ein zerstörungsfreies Herausziehen des Zapfens verhindern.

Vorzugsweise weist der erfindungsgemäße Eckverbinder mehr als einen Zapfen auf, die von der ersten Anlagefläche abstehen. Eine Ausgestaltung der Erfindung sieht drei Zapfen vor, die von der ersten Anlagefläche des erfindungsgemäßen Eckverbinders vorzugsweise senkrecht abstehen und die verschiedene Abstände voneinander aufweisen. Durch diese Ausführung lässt sich verhindern, dass der Eckverbinder anders als vorgesehen an den beiden plattenförmigen Elementen angebracht wird.

Vorzugsweise sind die Zapfen in einer gemeinsamen, zu der ersten Anlagefläche des Eckverbinders vorzugsweise senkrechten und/oder zu der zweiten Anlagefläche des Eckverbinders vorzugsweise parallelen Ebene angeordnet.

Es weist insbesondere nur die erste Anlagefläche des erfindungsgemäßen Eckverbinders einen oder mehrere Zapfen auf, von der zweiten Anlagefläche steht bei dieser Ausführung der Erfindung kein Zapfen ab. Insbesondere weist der Eckverbinder ausschließlich zueinander parallele Zapfen auf.

Eine Ausgestaltung der Erfindung sieht vor, dass der oder die Zapfen keinen kreisrunden Querschnitt sondern beispielsweise einen elliptischen oder ovalen Querschnitt aufweisen. Möglich ist auch ein eckiger Querschnitt des oder der Zapfen. Dadurch lässt sich der oder lassen sich die Zapfen mit einer kleineren Kraft in das Durchgangsloch oder Sackloch in den plattenförmigen Elementen einbringen. Dabei verläuft eine große Halbachse beziehungsweise eine größte Querabmessung des Querschnitts des oder der Zapfen vorzugsweise parallel zu der zweiten Anlagefläche des Eckverbinders. Dadurch wird das plattenförmige Element mit dem oder den Sacklöchern in seiner Plattenebene stärker als quer zur Plattenebene beansprucht, wodurch die Gefahr eines "Aufsprengens" des plattenförmigen Elements verringert ist. Das plattenförmige Element mit dem oder den Durchgangslöchern wird parallel zu einem dem oder den Sacklöchern nahen Rand stärker beansprucht als senkrecht zu dem Rand, was auch dort die Gefahr eines "Aufsprengens" des plattenförmigen Elements verringert.

Eine bevorzugte Ausgestaltung der Erfindung sieht eine Ausbildung des Eckverbinders mit einem geraden L-Profil mit beispielsweise streifenförmigen, in einer Längsrichtung des L-Profils verlaufenden Schenkeln vor. Einander zugewandte Innenseiten der Schenkel bilden die beiden Anlageflächen für die beiden zu verbindenden, plattenförmigen Elemente. Die beiden Schenkel des L-Profils beziehungsweise ihre die beiden Anlageflächen bildenden Innenseiten stehen in dem insbesondere rechten Winkel zueinander und von einer der beiden Innenseiten steht der oder stehen die Zapfen insbesondere senkrecht und/oder insbesondere parallel zu der Innenseite des anderen Schenkels des L-Profils ab.

Zu einer Auflage auf einem beispielsweise oberen Rand des ersten plattenförmigen Elements oder auf beispielsweise oberen Rändern beider plattenförmigen Elemente sieht eine Ausgestaltung der Erfindung eine Innenendfläche an einem Ende der beiden Anlageflächen beziehungsweise an einem Ende des L-Profils des erfindungsgemäßen Eckverbinders vor. Die Innenendfläche steht in - vorzugsweise rechten - Winkeln zu den beiden Anlageflächen des Eckverbinders und erstreckt sich von einer zur anderen der beiden Anlageflächen. Die Innendfläche kann als eine Art Anschlag oder Auflager an einem Ende des Eckverbinders zur Anlage an den oberen Rändern der beiden plattenförmigen Elemente aufgefasst werden.

Vorzugsweise weist der erfindungsgemäße Eckverbinder ein plattenförmiges Endstück an seinem einen Ende auf, das sich in der Innenecke zwischen den Anlageflächen des Eckverbinders von der einen zur anderen Anlagefläche erstreckt. Eine den beiden Anlageflächen zugewandte Seite des Endstücks bildet die Innenendfläche des Eckverbinders. Das plattenförmige Endstück kann auch als Abdeckung für
die beispielsweise oberen Ränder der zu verbindenden plattenförmigen Elemente aufgefasst werden.

Um eine Teleskopschiene zum Ausziehen einer Schublade an einer Unterseite der Schublade an dem Eckverbinder vorbei führen zu können, weist bei einer Ausführung der Erfindung einer der beiden Schenkel des Eckverbinders eine Aussparung an beziehungsweise aus einem dem anderen Schenkel und dem Scheitel fernen Rand auf. Die Aussparung befindet sich insbesondere an einem Ende des Eckverbinders, und zwar an dem dem Endstück fernen Ende des Eckverbinders. Vorzugsweise befindet sich die Aussparung in dem zu den Zapfen parallelen Schenkel. "Aussparung" bedeutet, dass der Schenkel im Bereich der Aussparung schmaler ist als außerhalb der Aussparung.

Um eine Teleskopschiene zum Ausziehen einer Schublade, die in einer Nut in einer Seitenwand der Schublade angeordnet ist, an dem Eckverbinder vorbei führen zu können, weist bei einer Ausführung der Erfindung einer der beiden Schenkel eine Ausnehmung auf, die sich über die Breite des Schenkels und über den Scheitel des L-Profils hinweg bis in den anderen Schenkel hinein erstreckt. Die Ausnehmung ist vorzugsweise mit Abstand von beiden Enden des Eckverbinders und/oder in dem Schenkel vorgesehen, von dem die Zapfen abstehen.

Der Eckverbinder kann die Aussparung und/oder die Ausnehmung aufweisen.

Vorzugsweise ist der erfindungsgemäße Eckverbinder einstückig, beispielsweise sind das L-Profil mit gegebenenfalls dem plattenförmigen Endstück an seinem einen Ende und dem oder den von der die erste Anlagefläche bildenden Innenseite eines der beiden Schenkel des L-Profils abstehen Zapfen in einem Stück ("in einem Schuss") durch Spritzgießen aus Kunststoff hergestellt.

Gegenstand des Anspruchs 13 ist eine Eckverbindung insbesondere eines Möbels mit zwei plattenförmigen Elementen beziehungsweise mit zwei Möbelplatten, die mit dem erfindungsgemäßen Eckverbinder miteinander verbunden sind. Dabei sind die beiden plattenförmigen Elemente in einem - vorzugsweise rechten - Winkel zueinander angeordnet. Die Anlageflächen des Eckverbinders befinden sich auf einander abgewandten Außenseiten der beiden plattenförmigen Elemente. Eine Stirnrandfläche des zweiten der beiden plattenförmigen Elemente liegt an einem Ende beziehungsweise an einem Rand des ersten plattenförmigen Elements an einer Innenseite des ersten plattenförmigen Elements an. Die Stirnrandfläche ist eine Endfläche an einem Rand des plattenförmigen Elements, die sich von der Innenseite zur Außenseite des plattenförmigen Elements erstreckt. In dem ersten plattenförmigen Element ist für jeden Zapfen des Eckverbinders ein Durchgangsloch angebracht, das das erste plattenförmige Element quer durchsetzt und das mit einem Sackloch fluchtet, das in der Stirnrandfläche des zweiten plattenförmigen Elements angebracht ist. Das oder die Sacklöcher sind insbesondere parallel zu einer Innenseite und einer Außenseite des zweiten plattenförmigen Elements angebracht und münden in der Stirnrandfläche des zweiten plattenförmigen Elements, zu der das oder die Sacklöcher insbesondere senkrecht sind. Die beiden plattenförmigen Elemente sind dadurch miteinander verbunden, dass der oder die Zapfen des Eckverbinders durch das oder die Durchgangslöcher in dem ersten plattenförmigen Element in das oder die Sacklöcher in der Stirnrandfläche des zweiten plattenförmigen Elements gesteckt sind. Zusätzlich halten die Anlageflächen des Eckverbinders die beiden plattenförmigen Elemente aneinander. Die Widerhaken an den Zapfen des Eckverbinders - sofern vorhanden - wirken einem Herausziehen aus dem oder den Sacklöchern im zweiten plattenförmigen Element entgegen und verbessern auf diese Weise den Halt des Eckverbinders an den beiden plattenförmigen Elementen und verbessern damit die Verbindung der beiden plattenförmigen Elemente miteinander. Das plattenförmige Endstück deckt den oberen Rand des ersten plattenförmigen Elements oder obere Ränder beider plattenförmigen Elemente beziehungsweise sich an die Ecke anschließende Ränder der plattenförmigen Elemente ab.

Die Widerhaken befinden sich erfindungsgemäß außerhalb eines Bereichs des/r Zapfen, der sich von dem Schenkel des Eckverbinders, von dem der/die Zapfen absteht/en, mindestens so weit an dem/n Zapfen entlang erstreckt, wie der andere Schenkel des Eckverbinders breit ist. Dabei ist eine Breite eine Erstreckung des anderen Schenkels quer zum Scheitel und parallel zu dem/n Zapfen. Diese Ausführung ermöglicht oder erleichtert eine Entformung des Eckverbinders aus einem Spritzgießwerkzeug nach einem Spritzgießen.

Um muldenförmige Senkungen in einer Außenseite des Schenkels des Eckverbinders, von dessen Innenseite der/die Zapfen abstehen, bei einer Herstellung des Eckverbinders durch Spritzgießen aus Kunststoff zu vermeiden, ist der/sind die Zapfen in bevorzugter Ausführung der Erfindung rohrförmige Hohlzapfen.

Das Möbel ist insbesondere eine Schublade mit einer Seitenwand und einer Rückwand, die die beiden plattenförmigen Elemente bilden, die mit dem erfindungsgemäßen Eckverbinder verbunden sind.

Sämtliche in der Beschreibung genannten und/oder der Zeichnung dargestellten Merkmale können einzeln für sich oder in jeder beliebigen Kombination bei Ausführungen der Erfindung verwirklicht sein. Ausführungen der Erfindung, die nicht alle, sondern nur einen Teil der Merkmale eines Anspruchs, auch des unabhängigen Anspruchs, aufweisen, sind möglich.

Die Erfindung wird nachfolgend anhand eines in der Zeichnung dargestellten Ausführungsbeispiels näher erläutert. Es zeigen:
- Figur 1: einen erfindungsgemäßen Eckverbinder in einer perspektivischen Darstellung;
- Figur 2: eine Explosionsdarstellung einer Eckverbindung mit dem Eckverbinder aus Figur 1 gemäß der Erfindung;
- Figur 3: die Eckverbindung aus Figur 2 von einer Außenseite in einer perspektivischen Darstellung;
- Figur 4: die Eckverbindung aus Figuren 2 und 3 von einer Innenseite in einer perspektivischen Darstellung; und
- Figur 5: eine Stirnansicht eines Zapfens des Eckverbinders aus Figur 1.

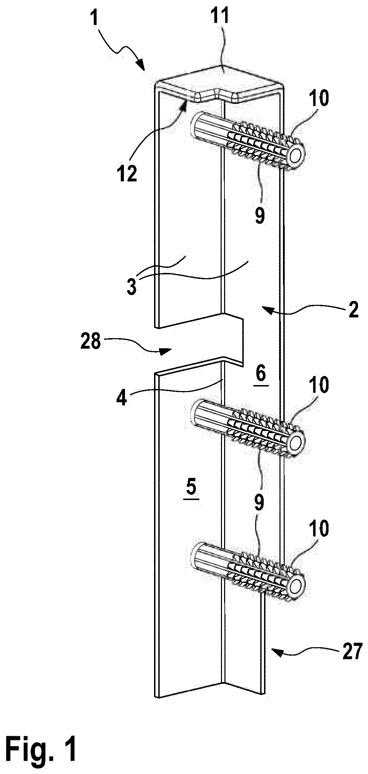

Der in Figur 1 dargestellte, erfindungsgemäße Eckverbinder 1 weist ein gerades L-Profil 2 mit zwei streifenförmigen Schenkeln 3 auf, die - im Ausführungsbeispiel - in einem Winkel von 90° zueinander angeordnet sind. Die - im Ausführungsbeispiel - streifenförmigen Schenkel 3 erstrecken sich parallel zu einem Scheitel 4 des L-Profils, wobei die Schenkel 3 an einander zugewandten Längsrändern am Scheitel 4 des L-Profils 2 des Eckverbinders 1 einstückig ineinander übergehen. Als Längsrichtung der Schenkel 3 des Eckverbinders 1 wird hier die Richtung parallel zum Scheitel 4 des L-Profils 2 bezeichnet unabhängig davon, ob die Schenkel 3 in dieser Richtung länger als senkrecht zum Scheitel 4 sind. Als Längsränder der Schenkel 3 werden entsprechend die zum Scheitel 4 des L-Profils 2 parallelen Ränder der Schenkel 3 des Eckverbinders 1 bezeichnet.

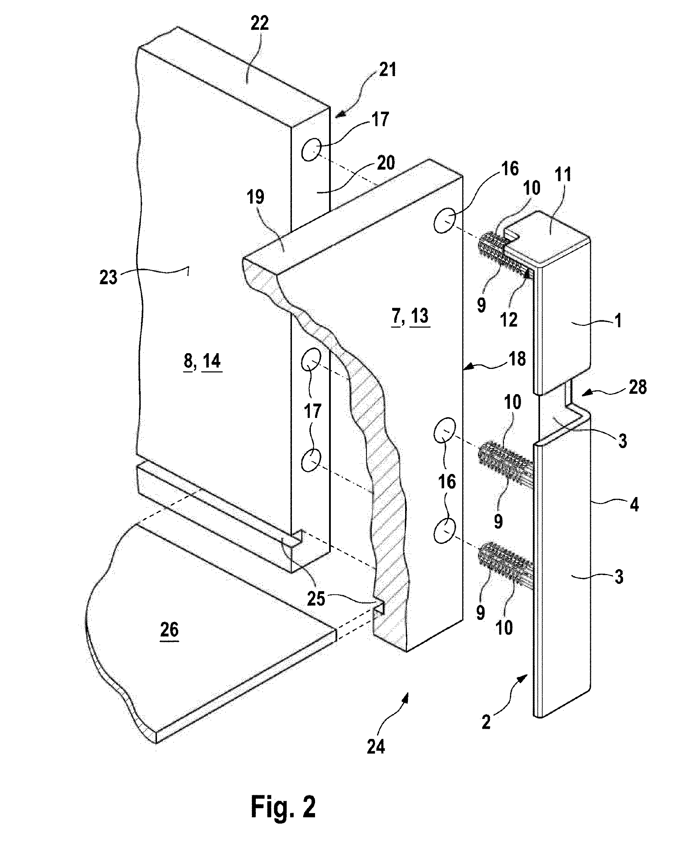

Einander zugewandte Seiten der Schenkel 3 des erfindungsgemäßen Eckverbinders 1, die einen Innenwinkel zwischen sich aufweisen, der im Ausführungsbeispiel 90°beträgt, bilden zwei Anlageflächen 5, 6 für zwei plattenförmige Elemente 7, 8 (Figuren 2 bis 4), die mit dem Eckverbinder 1 in dem Winkel - von im Ausführungsbeispiel 90° - zueinander miteinander verbindbar sind, verbunden werden beziehungsweise verbunden sind. Eine der beiden Anlageflächen 5, die hier als erste Anlagefläche 5 bezeichnet wird, weist drei Zapfen 9 auf, die in einer zu der ersten Anlagefläche 5 senkrechten und zum Scheitel 4 des L-Profils 2 des Eckverbinders 1 parallelen Ebene beziehungsweise in einer zu einer zweiten der beiden Anlageflächen 6 des Eckverbinders 1 parallelen Ebene angeordnet sind. Die Zapfen 9 weisen verschiedene Abstände voneinander auf. Die Anzahl von drei Zapfen 9, ihre Anordnung in einer gemeinsamen Ebene und in verschiedenen Abständen voneinander ist nicht zwingend für die Erfindung. Vorgesehen sind mindestens zwei Zapfen 9, wobei auch mehr als drei Zapfen 9 möglich sind. Eine Ausführung des Eckverbinder 1 mit nur einem Zapfen 9 schließt die Erfindung nicht aus.

Der Eckverbinder 1 weist ausschließlich zueinander parallele Zapfen 9 auf, die von der ersten Anlagefläche 5 abstehen. Die zweite Anlagefläche 6 weist keine Zapfen 9 auf. Im Ausführungsbeispiel befinden sich die Zapfen 9 in einer gemeinsamen Ebene.

An ihrem Umfang weisen die Zapfen 9 sägezahnförmige Widerhaken 10 auf, die in Richtung der ersten Anlagefläche 5 gerichtet sind. Die Widerhaken 10 sind - im Ausführungsbeispiel gleichmäßig - über den Umfang der Zapfen 9 verteilt und über einen Teil einer Länge der Zapfen 9 beginnend an der ersten Anlagefläche 5 fernen, freien Enden der Zapfen 9 verteilt angeordnet.

In einem Längsbereich, der sich von dem Schenkel 3 des Eckverbinders 1, von dem die Zapfen 9 abstehen, mindestens so weit erstreckt, wie der andere Schenkel senkrecht zu dem Scheitel 4 des L-Profils 2 des Eckverinders 1 und parallel zu den Zapfen 9 breit ist, weisen die Zapfen 9 keine Widerhaken 10 auf, um den Eckverbinder 1 nach einem Spritzgießen aus Kunststoff aus einem Spritzgießwerkzeug entformen zu können.

Im Ausführungsbeispiel sind die Zapfen 9 rohrförmige Hohlzapfen (vgl. Figur 1), damit sich beim Spritzgießen des Eckverbinders 1 keine muldenförmigen Senkungen in einer Außenseite des Schenkels 3 bilden, von dessen Innenseite die Zapfen 9 abstehen.

An einem Ende des L-Profils 2 weist der Eckverbinder 1 ein plattenförmiges Endstück 11 auf, dessen den Schenkeln 3 zugewandte Seite eine Innenendfläche 12 des L-Profils 2 des Eckverbinders 1 bildet, die sich in dem Innenwinkel zwischen den beiden Anlageflächen 5, 6 des L-Profils 2 des erfindungsgemäßen Eckverbinders 1 erstreckt. Das plattenförmige Endstück 11 beziehungsweise die Innenendfläche 12 steht in einem Winkel - im Ausführungsbeispiel in einem rechten Winkel - zu dem L-Profil 2 beziehungsweise zu den beiden Schenkeln 3 des Eckverbinders 1.

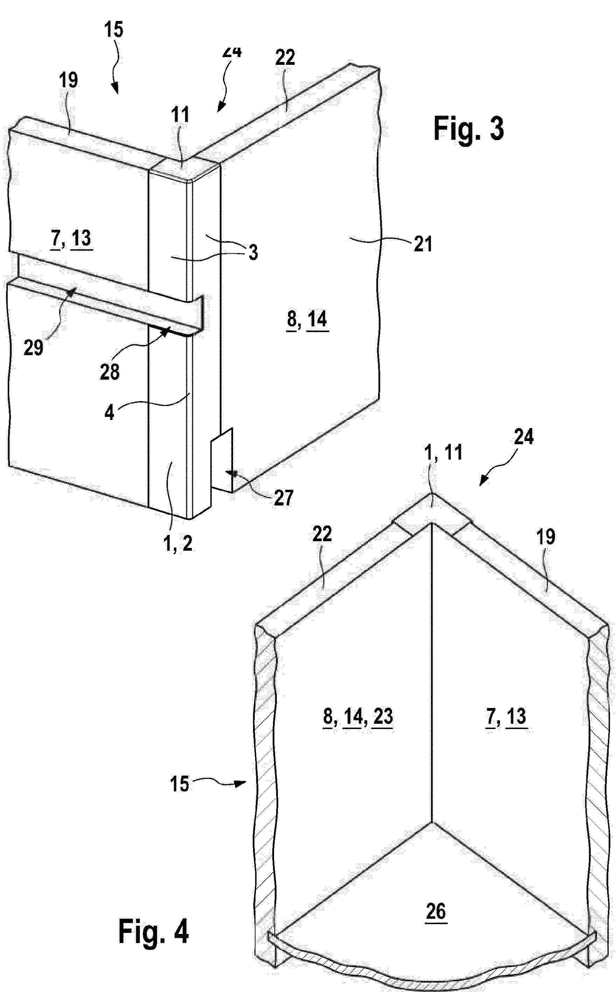

Wie in Figuren 1 und 3 zu sehen, weist einer der beiden Schenkel 3 des erfindungsgemäßen Eckverbinders 1 eine Aussparung 27 an beziehungsweise in einem dem anderen Schenkel 3 und dem Scheitel 4 fernen, zu dem scheitel 4 parallelen Längsrand auf. Im Bereich der Aussparung 27 ist der Schenkel 3 schmaler als außerhalb der Aussparung 27. Im Ausführungbeispiel befindet sich die Aussparung 27 an einem dem Endstück 11 fernen Ende des Eckverbinders 1 und an dem Schenkel 3, der parallel zu den Zapfen 9 ist. Die Aussparung 27 ermöglicht eine Durchführung einer nicht dargestellten Teleskopschiene zum Ausziehen einer noch zu erläuternden Schublade 15, die an einer Unterseite der Schublade 15 angeordnet ist. Die Teleskopschiene geht durch die Aussparung 27 an dem Schenkel 3 des Eckverinders vorbei. Wie in Figur 3 zu sehen, ist vorzugsweise eine Rückwand 14 der Schublade 15 im Bereich der Aussparung 27 des Eckverbinders 1 ebenfalls ausgespart.

Wie in Figuren 2 und 3 zu sehen, weist einer der beiden Schenkel 3 des erfindungsgemäßen Eckverbinders 1 eine Ausnehmung 28 auf, die sich über eine Breite des Schenkels 3 und über den Scheitel 4 des L-Profils 2 des Eckverbinders 1 hinweg bis in den anderen Schenkel 3 hinein erstreckt. Die Ausnehmung 28 befindet sich in einem mittleren Bereich des Eckverbinders 1 zwischen den beiden Enden des Eckverbinders 1. Die Ausnehmung 28 ermöglicht die Durchführung der nicht dargestellte Telekkopschiene der Schublade 15, wenn die Teleskopschiene außen an einer Seitenwand 13 der Schublade 15 angeordnet ist. In Figur 3 weist die Seitenwand 13 der Schublade 15 eine Nut 28 in ihrer Außenseite auf, in der die nicht dargestellte Teleskopschiene angeordnet ist oder wird.

Im Ausführungsbeispiel weist der Schenkel 3 die Ausnehmung 28 auf, von dessen Innenseite die Zapfen 9 abstehen. Es weist also ein Schenkel 3 die Aussparung 27 und vorzugsweise der andere Schenkel 3 die Ausnehmung 28 auf.

Der Eckverbinder 1 kann die Aussparung 27 und/oder die Ausnehmung 28 aufweisen. Ausführungen, die weder die Aussparung 27 noch die Ausnehmung 28 aufweisen, sind ebenfalls möglich.

Im Ausführungsbeispiel ist der erfindungsgemäße Eckverbinder 1 mit seinem L-Profil 2, den Zapfen 9 und dem plattenförmigen Endstück 11 einstückig durch Spritzgießen aus Kunststoff hergestellt.

Der Eckverbinder 1 ist zu einem Verbinden der beiden plattenförmigen Elemente 7, 8 in dem Winkel vorgesehen, den die beiden Schenkel 3 des L-Profils 2 des Eckverbinders 1 zueinander aufweisen, im Ausführungsbeispiel also in einem Winkel von 90° zueinander. Insbesondere ist der Eckverbinder 1 zu einem Verbinden von zwei plattenförmigen Elementen 7, 8 eines Möbels vorgesehen, wobei die plattenförmigen Elemente 7, 8 in diesem Fall auch als Möbelplatten bezeichnet werden können. In dem in Figuren 2 bis 4 dargestellten Ausführungsbeispiel der Erfindung verbindet der Eckverbinder 1 eine Seitenwand 13 mit einer Rückwand 14 eines Möbels, das im Ausführungsbeispiel eine im Übrigen nicht dargestellte Schublade 15 ist. Dabei bilden die Seitenwand 13 das erste plattenförmige Element 7, die Rückwand 14 das zweite plattenförmige Element 8 und die Schublade 15 das Möbel.

Zum Verbinden sind in einem der beiden plattenförmigen Elemente 7 drei Durchgangslöcher 16 und in einem anderen der beiden plattenförmigen Elemente 8 drei Sacklöcher 17 angebracht. Im Ausführungsbeispiel sind die Durchgangslöcher 16 im ersten plattenförmigen Element 7 beziehungsweise in der Seitenwand 13 angebracht. Die Durchgangslöcher 16 sind in einem Abstand von einem Stirnrand 18 des plattenförmigen Elements 7 angebracht, der so groß wie der Abstand der Zapfen 9 des Eckverbinders 1 von der zweiten Anlagefläche 6 des L-Profils 2 des Eckverbinders 1 ist. Untereinander weisen die Durchgangslöcher 16 die gleichen Abstände voneinander auf wie die Zapfen 9 und es ist ein erstes der Durchgangslöcher 5 in einem Abstand von einem oberen Rand 19 des plattenförmigen Elements 7 angebracht, der so groß wie der Abstand eines der Innenendfläche 12 des Eckverbinders 1 nächsten Zapfens 9 von der Innenendfläche 12 ist. Als Stirnrand 18 wird hier ein dem Eckverbinder 1 zugewandter Rand und als oberer Rand 19 ein dem Endstück 11 zugewandter Rand des plattenförmigen Elements 7 bezeichnet.

Die drei Sacklöcher 17 werden in einer Stirnrandfläche 20 des anderen plattenförmigen Elements 8, hier also des zweiten plattenförmigen Elements 8 angebracht, das im Ausführungsbeispiel die Rückwand 14 der Schublade 15 bildet. Die Stirnrandfläche 20 ist eine Stirnfläche an dem dem ersten plattenförmigen Element 7 und dem Eckverbinder 1 zugewandten Stirnrand des zweiten plattenförmigen Elements 8. Die drei Sacklöcher 17 werden in einem Abstand von einer Außenseite 21 des zweiten plattenförmigen Elements 8 angebracht, der so groß wie der Abstand der Zapfen 19 von der zweiten Anlagefläche 6 des Eckverbinders 1 ist. Abstände der drei Sacklöcher 17 voneinander ist so groß wie der Abstand der Zapfen 19 voneinander und ein Abstand eines einem oberen Rand 22 des plattenförmigen Elements 8 nächsten Sacklochs 17 von dem oberen Rand 22 ist so groß wie der Abstand des der Innenendfläche 12 nächsten Zapfens 9 des Eckverbinders 1 von der Innenendfläche 12. Die Sacklöcher 17 sind parallel zu der Außenseite 21 und zum oberen Rand 22 des plattenförmigen Elements 8 in dem plattenförmigen Element 8 angebracht. Als Außenseite 21 wird eine dem ersten plattenförmigen Element 7 abgewandte Seite des zweiten plattenförmigen Elements 8 bezeichnet.

Zum Verbinden werden die beiden plattenförmigen Elemente 7, 8 in einem rechten Winkel zueinander angeordnet derart, dass die Stirnrandfläche 20 des zweiten plattenförmigen Elements 8 an einer ihm zugewandten Innenseite 23 des ersten plattenförmigen Elements 7 anliegt und die Sacklöcher 17 in der Stirnrandfläche 20 des zweiten plattenförmigen Elements 8 mit den das erste plattenförmige Element 7 nach seinem Stirnrand 18 quer durchsetzenden Durchgangslöchern 16 fluchten. Der Eckverbinder 1 wird mit seinen Zapfen 9 durch die Durchgangslöcher 16 in dem ersten plattenförmigen Element 7 hindurch in die Sacklöcher 17 in dem zweiten plattenförmigen Element 8 gesteckt bis die erste Anlagefläche 5 des L-Profils des Eckverbinders 1 an einer Außenseite des ersten plattenförmigen Elements 7 anliegt. Die zweite Anlagefläche 6 liegt an der Außenseite 21 des zweiten plattenförmigen Elements 8 an und die Innenendfläche 12 des plattenförmigen Entstücks 11 des Eckverbinders 1 an den oberen Rändern 19, 22 der plattenförmigen Elemente 7, 8 auf.

Die Widerhaken 10 der Zapfen 9 halten die Zapfen 9 in den Sacklöchern 17 des zweiten plattenförmigen Elements 8 und wirken einem Herausziehen aus den Sacklöchern 17 entgegen. Durchmesser der Durchgangslöcher 16 und der Sacklöcher 17 können so gewählt und die Widerhaken 10 so ausgeführt sein, dass sich die Zapfen 9 zum Lösen der Verbindung zerstörungsfrei aus den Sacklöchern 17 und den Durchgangslöchern 16 herausziehen lassen oder so, dass sich die Zapfen 9 nicht zerstörungsfrei aus den Sacklöchern 17 des zweiten plattenförmigen Elements 8 herausziehen lassen, wenn ein Lösen der Verbindung vermieden werden soll.

Der die beiden plattenförmigen Elemente 7, 8 mit seinen Anlageflächen 5, 6 und den Zapfen 9 verbindende Eckverbinder 1 und die beiden plattenförmigen Elemente 7, 8 bilden eine Eckverbindung 24 gemäß der Erfindung.

An ihren Innenseiten 23 weisen die beiden plattenförmigen Elemente 7, 8, die die Seitenwand 13 und die Rückwand 14 der Schublade 15 bilden, Nuten 25 auf, die parallel zu unteren, den oberen Rändern 22 gegenüberliegenden Rändern verlaufen. In die Nuten 25 ist ein Boden 26 der Schublade 15 gesteckt.

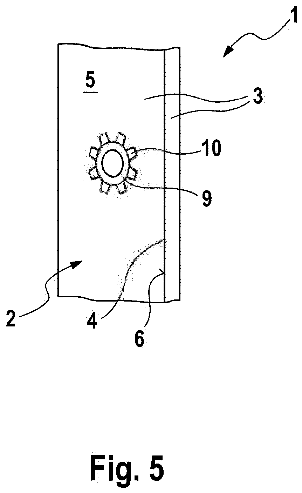

Die Zapfen 9 können kreisförmige Querschnitte aufweisen. Figur 5 zeigt einen der Zapfen 9 mit einem runden, allerdings nicht kreisförmigen sondern elliptischen Querschnitt, wobei eine größere Halbachse, das heißt eine größte Querabmessung der Zapfen 9 parallel zu der zweiten Anlagefläche 6 verläuft. Möglich ist beispielsweise auch ein ovaler Querschnitt der Zapfen 9. Der elliptische oder ovale Querschnitt oder jedenfalls nicht kreisrunde Querschnitt erleichtert das Durchstecken der Zapfen 9 durch die Durchgangslöcher 16 im ersten plattenförmigen Element 7 und das Stecken der Zapfen 9 in die Sacklöcher 17 im zweiten plattenförmigen Element 8. Durch die Ausrichtung der größten Querabmessung der Zapfen 9 parallel zur zweiten Anlagefläche 6 wird das erste plattenförmige Element 7 von den durch seine Durchgangslöcher 16 gesteckten Zapfen 9 des Eckverbinders 1 parallel zu einem den Durchgangslöchern 18 nahen Rand stärker als quer zu dem Rand und das zweite plattenförmige Element 8 von den in seine Sacklöcher 17 gesteckten Zapfen 9 des Eckverbinders 1 stärker in seiner Plattenebene als quer zur Plattenebene beansprucht. Beides verringert eine Gefahr des "Aufsprengens" der plattenförmigen Elemente 7, 8.

## Patentansprüche

1. Eckverbinder zum Verbinden von zwei plattenförmigen, in einem vorzugsweise rechten Winkel zueinander angeordneten Elementen (7, 8), wobei der Eckverbinder (1) zwei in einem Winkel von weniger als 180° und vorzugsweise in einem Winkel von 90° zueinander angeordnete Anlageflächen (5, 6) für die beiden plattenförmigen Elemente (7, 8) und einen Zapfen (9) aufweist, der vorzugsweise senkrecht von einer ersten der beiden Anlageflächen (5, 6) absteht und Widerhaken (10) an seinem Umfang aufweist, **dadurch gekennzeichnet, dass** der Zapfen (9) keinen Widerhaken (10) in einem Bereich aufweist, der sich von einem Schenkel (3), von dem der Zapfen (9) absteht, mindestens so weit entlang des Zapfens (9) erstreckt, wie ein anderer Schenkel (3) des Eckverbinders (1) breit ist.

2. Eckverbinder nach Anspruch 1, **dadurch gekennzeichnet, dass** der Eckverbinder (1) drei Zapfen (9) aufweist, die von der ersten Anlagefläche (5) des Eckverbinders (1) vorzugsweise senkrecht abstehen und die verschiedene Abstände voneinander aufweisen.

3. Eckverbinder nach Anspruch 2, **dadurch gekennzeichnet, dass** die Zapfen (9) in einer gemeinsamen, zu der ersten Anlagefläche (5) des Eckverbinders (1) vorzugsweise senkrechten und/oder zu einer zweiten der beiden Anlageflächen (6) vorzugsweise parallelen Ebene von der ersten Anlagefläche (5) abstehen.

4. Eckverbinder nach einem oder mehreren der Ansprüche 1 bis 3, **dadurch gekennzeichnet, dass** ausschließlich die erste Anlagefläche (5) Zapfen (9) aufweist.

5. Eckverbinder nach einem oder mehreren der vorhergehenden Ansprüche, **dadurch gekennzeichnet, dass** der Zapfen (9) einen nicht kreisrunden Querschnitt und insbesondere einen elliptischen oder ovalen Querschnitt aufweist.

6. Eckverbinder nach einem oder mehreren der vorhergehenden Ansprüche, **dadurch gekennzeichnet, dass** der/die Zapfen (9) rohrförmige Hohlzapfen sind.

7. Eckverbinder nach einem oder mehreren der vorhergehenden Ansprüche, **dadurch gekennzeichnet, dass** der Eckverbinder (1) ein gerades L-Profil (2) aufweist, dessen Innenseiten die beiden Anlageflächen (5, 6) bilden.

8. Eckverbinder nach einem oder mehreren der vorhergehenden Ansprüche, **dadurch gekennzeichnet, dass** der Eckverbinder (1) eine den beiden Anlageflächen (5, 6) zugewandte Innenendfläche (12) an einem Ende der beiden Anlageflächen (5, 6) in einem vorzugsweise rechten Winkel zu den beiden Anlageflächen (5, 6) aufweist, die sich zwischen den beiden Anlageflächen (5, 6) erstreckt.

9. Eckverbinder nach Anspruch 8, **dadurch gekennzeichnet, dass** der Eckverbinder (1) ein plattenförmiges Endstück (11) an dem einen Ende der beiden Anlageflächen (5, 6) aufweist, das in einem vorzugsweise rechten Winkel zu beiden Anlageflächen (5, 6) angeordnet ist, sich von einer zur anderen Anlagefläche (5, 6) erstreckt und dessen den beiden Anlageflächen (5, 6) zugewandte Fläche die Innenendfläche (12) bildet.

10. Eckverbinder nach einem oder mehreren der vorhergehenden Ansprüche, **dadurch gekennzeichnet, dass** einer der beiden Schenkel (3) des Eckverbinders (1) eine Aussparung (27) an einem Ende des L-Profils (2) in einem dem anderen Schenkel (3) fernen Rand des einen Schenkels (3) aufweist.

11. Eckverbinder nach einem oder mehreren der vorhergehenden Ansprüche, **dadurch gekennzeichnet, dass** einer der beiden Schenkel (3) des Eckverbinders (1) eine Ausnehmung (28) aufweist, die sich über eine Breite des Schenkels (3) bis in den anderen Schenkel (3) erstreckt.

12. Eckverbinder nach einem oder mehreren der vorhergehenden Ansprüche, **dadurch gekennzeichnet, dass** der Eckverbinder (1) einstückig ist.

13. Eckverbindung mit zwei plattenförmigen, in einem vorzugsweise rechten Winkel zueinander angeordneten, plattenförmigen Elementen (7, 8), deren einander zugewandte Ränder (18) mit einem Eckverbinder (1) nach einem oder mehreren der vorhergehenden Ansprüche verbunden sind, wobei die Anlageflächen (5, 6) des Eckverbinders (1) an Außenseiten (21) der beiden plattenförmigen Elemente (7, 8) anliegen, **dadurch gekennzeichnet, dass** eine Stirnrandfläche (20) eines zweiten der beiden plattenförmigen Elemente (8) an einer Innenseite (23) eines ersten der beiden plattenförmigen Elemente (7) anliegt, dass das zweite plattenförmige Element (8) ein Sackloch (17)/Sacklöcher (17) in seiner Stirnrandfläche (20) aufweist, in dem/denen die Zapfen (9) des Eckverbinders (1) stecken, dass das erste plattenförmige Element (7) ein Durchgangsloch (16)/Durchgangslöcher (16) aufweist, die mit dem Sackloch (17)/den Sacklöchern (17) im zweiten plattenförmige Element (8) fluchten und durch die der/die Zapfen (9) des Eckverbinders (1) durchgeht/en.

14. Möbel, insbesondere Schublade (15) mit einer Eckverbindung (24) nach Anspruch 13, **dadurch gekennzeichnet, dass** eines der beiden plattenförmigen Elemente (7) eine Seitenwand (13) und ein anderes der beiden plattenförmigen Elemente (8) eine Rückwand (14) des Möbels ist, die mit dem Eckverbinder (1) verbunden sind.

## Claims

1. Corner connector for connecting two plate-shaped elements (7, 8) arranged at a preferably right angle to one another, the corner connector (1) having two contact surfaces (5, 6) arranged at an angle of less than 180° and preferably at an angle of 90° to one another for the two plate-shaped elements (7, 8) and a pin (9) which preferably projects perpendicularly from a first of the two contact surfaces (5, 6) and has barbs (10) on its circumference, **characterized in that** the pin (9) has no barb (10) in a region which extends from a leg (3) from which the pin (9) projects, at least as far along the pin (9) as another leg (3) of the corner connector (1) is wide.

2. Corner connector according to claim 1, **characterized in that** the corner connector (1) has three pins (9) which preferably protrude vertically from the first contact surface (5) of the corner connector (1) and which have different distances from one another.

3. Corner connector according to claim 2, **characterized in that** the pins (9) protrude from the first contact surface (5) in a common plane which is preferably perpendicular to the first contact surface (5) of the corner connector (1) and/or preferably parallel to a second of the two contact surfaces (6).

4. Corner connector according to one or more of claims 1 to 3,
**characterized in that** only the first contact surface (5) has pins (9).

5. Corner connector according to one or more of the preceding claims, **characterized in that** the pin (9) has a non-circular cross-section and in particular an elliptical or oval cross-section.

6. Corner connector according to one or more of the preceding claims, **characterized in that** the pin(s) (9) is/are tubular hollow pins.

7. Corner connector according to one or more of the preceding claims, **characterized in that** the corner connector (1) has a straight L-profile (2), the inner sides of which form the two contact surfaces (5, 6).

8. Corner connector according to one or more of the preceding claims, **characterized in that** the corner connector (1) has an inner end surface (12) facing the two contact surfaces (5, 6) at one end of the two contact surfaces (5, 6) at a preferably right angle to the two contact surfaces (5, 6), which extends between the two contact surfaces (5, 6).

9. Corner connector according to claim 8, **characterized in that** the corner connector (1) has a plate-shaped end piece (11) at one end of the two contact surfaces (5, 6), which is arranged at a preferably right angle to both contact surfaces (5, 6), extends from one contact surface (5, 6) to the other and the surface of which facing the two contact surfaces (5, 6) forms the inner end surface (12).

10. Corner connector according to one or more of the preceding claims, **characterized in that** one of the two legs (3) of the corner connector (1) has a recess (27) at one end of the L-profile (2) in an edge of one leg (3) remote from the other leg (3).

11. Corner connector according to one or more of the preceding claims, **characterized in that** one of the two legs (3) of the corner connector (1) has a recess (28) which extends over a width of the leg (3) into the other leg (3).

12. Corner connector according to one or more of the preceding claims, **characterized in that** the corner connector (1) is a single piece.

13. Corner connection having two plate-shaped elements (7, 8) arranged at a preferably right angle to each other, the mutually facing edges (18) of which are connected to a corner connector (1) according to one or more of the preceding claims, the contact surfaces (5, 6) of the corner connector (1) bearing against outer sides (21) of the two plate-shaped elements (7, 8), **characterized in that** an end edge surface (20) of a second of the two plate-shaped elements (8) bears against an inner side (23) of a first of the two plate-shaped elements (7), **in that** the second plate-shaped element (8) has a blind hole (17)/blind holes (17) in its front edge surface (20) into which the pins (9) of the corner connector (1) are inserted, **in that** the first plate-shaped element (7) has a through hole (16)/through holes (16) which are aligned with the blind hole (17)/the blind holes (17) in the second plate-shaped element (8) and through which the pin(s) (9) of the corner connector (1) pass(es).

14. Furniture, in particular a drawer (15) having a corner connection (24) according to claim 13, **characterized in that** one of the two plate-shaped elements (7) is a side wall (13) and another of the two plate-shaped elements (8) is a rear wall (14) of the furniture, which are connected to the corner connector (1).

## Revendications

1. Connecteur d'angle permettant de relier deux éléments en forme de plaque (7, 8), disposés de préférence à angle droit l'un par rapport à l'autre, dans lequel le connecteur d'angle (1) présente deux surfaces d'appui (5, 6) disposées l'une par rapport à l'autre selon un angle inférieur à 180° et de préférence selon un angle de 90° pour les deux éléments en forme de plaque (7, 8), et un tenon (9) qui dépasse de préférence perpendiculairement d'une première surface d'appui parmi les deux surfaces d'appui (5, 6) et qui présente des barbes (10) sur sa périphérie, **caractérisé en ce que** le tenon (9) ne présente pas de barbe (10) dans une zone qui s'étend le long du tenon (9), à partir d'une branche (3) de laquelle le tenon (9) dépasse, au moins aussi loin qu'une autre branche (3) du connecteur d'angle (1) est large.

2. Connecteur d'angle selon la revendication 1, **caractérisé en ce que** le connecteur d'angle (1) présente trois tenons (9) qui dépassent, de préférence perpendiculairement, de la première surface d'appui (5) du connecteur d'angle (1) et qui présentent des distances différentes entre eux.

3. Connecteur d'angle selon la revendication 2, **caractérisé en ce que** les tenons (9) dépassent de la première surface d'appui (5) dans un plan commun, de préférence perpendiculaire à la première surface d'appui (5) du connecteur d'angle (1) et/ou de préférence parallèle à une seconde surface d'appui parmi les deux surfaces d'appui (6).

4. Connecteur d'angle selon l'une ou plusieurs des revendications 1 à 3, **caractérisé en ce que** seule la première surface d'appui (5) présente des tenons (9).

5. Connecteur d'angle selon l'une ou plusieurs des revendications précédentes, **caractérisé en ce que** le tenon (9) présente une section transversale non circulaire et en particulier une section transversale elliptique ou ovale.

6. Connecteur d'angle selon l'une ou plusieurs des revendications précédentes, **caractérisé en ce que** le/les tenons (9) sont des tenons creux tubulaires.

7. Connecteur d'angle selon l'une ou plusieurs des revendications précédentes, **caractérisé en ce que** le connecteur d'angle (1) présente un profilé en L (2) droit dont les côtés intérieurs forment les deux surfaces d'appui (5, 6).

8. Connecteur d'angle selon l'une ou plusieurs des revendications précédentes, **caractérisé en ce que** le connecteur d'angle (1) présente une surface d'extrémité intérieure (12) tournée vers les deux surfaces d'appui (5, 6) à une extrémité des deux surfaces d'appui (5, 6) à un angle de préférence droit par rapport aux deux surfaces d'appui (5, 6), laquelle surface d'extrémité intérieure s'étend entre les deux surfaces d'appui (5, 6).

9. Connecteur d'angle selon la revendication 8, **caractérisé en ce que** le connecteur d'angle (1) présente une pièce d'extrémité (11) en forme de plaque à l'une des extrémités des deux surfaces d'appui (5, 6), laquelle pièce d'extrémité est disposée à un angle de préférence droit par rapport aux deux surfaces d'appui (5, 6), s'étend d'une surface d'appui (5, 6) à l'autre et dont la surface tournée vers les deux surfaces d'appui (5, 6) forme la surface d'extrémité intérieure (12).

10. Connecteur d'angle selon l'une ou plusieurs des revendications précédentes, **caractérisé en ce que** l'une des deux branches (3) du connecteur d'angle (1) présente un évidement (27) à une extrémité du profilé en L (2) dans un bord de la branche (3) éloigné de l'autre branche (3).

11. Connecteur d'angle selon l'une ou plusieurs des revendications précédentes, **caractérisé en ce que** l'une des deux branches (3) du connecteur d'angle (1) présente un évidement (28) qui s'étend sur une largeur de la branche (3) jusque dans l'autre branche (3).

12. Connecteur d'angle selon l'une ou plusieurs des revendications précédentes, **caractérisé en ce que** le connecteur d'angle (1) est en une seule pièce.

13. Liaison d'angle comportant deux éléments en forme de plaque (7, 8) disposés de préférence à angle droit l'un par rapport à l'autre et dont les bords (18) tournés l'un vers l'autre sont reliés avec un connecteur d'angle (1) selon l'une ou plusieurs des revendications précédentes, dans laquelle les surfaces d'appui (5, 6) du connecteur d'angle (1) s'appuient contre des côtés extérieurs (21) des deux éléments en forme de plaque (7, 8), **caractérisée en ce qu'**une surface de bord frontal (20) d'un second élément parmi les deux éléments en forme de plaque (8) s'appuie contre un côté intérieur (23) d'un premier élément parmi les deux éléments en forme de plaque (7), **en ce que** le second élément en forme de plaque (8) présente un trou borgne (17)/des trous borgnes (17) dans sa surface de bord frontal (20), dans lequel/lesquels sont insérés les tenons (9) du connecteur d'angle (1), **en ce que** le premier élément en forme de plaque (7) présente un trou de passage (16)/des trous de passage (16) qui sont alignés avec le trou borgne (17)/les trous borgnes (17) dans le second élément en forme de plaque (8) et à travers lesquels passent le/les tenons (9) du connecteur d'angle (1).

14. Meuble, en particulier tiroir (15) comportant une liaison d'angle (24) selon la revendication 13, **caractérisé en ce que** l'un des deux éléments en forme de plaque (7) est une paroi latérale (13) et un autre des deux éléments en forme de plaque (8) est une paroi arrière (14) du meuble qui sont reliées avec le connecteur d'angle (1).
